# FASCICULE DE BREVET EUROPEEN

(11) **EP 3 222 658 B1**
(45) Date de publication et mention de la délivrance du brevet: **12.08.2020**
(21) Numéro de dépôt: 17162898.5
(22) Date de dépôt: 24.03.2017
(51) Int. Cl.: C08L 3/02, A23L 29/212, A23L 23/00, A23L 27/30, A23L 33/21

(54) **AGENT DE RETARDEMENT DE LA TEMPÉRATURE DE GÉLATINISATION DE L'AMIDON COMPRENANT DES FRUCTO-OLIGOSACCHARIDES À CHAÎNE COURTE (SCFOS)**
RETARDIERUNGSMITTEL FÜR DIE VERKLEISTERUNGSTEMPERATUR VON STÄRKE, DAS KURZKETTIGE FRUCTOOLIGOSACCHARIDE (SCFOS) ENTHÄLT
AGENT FOR DELAYING THE GELLING TEMPERATURE OF STARCH INCLUDING SHORT-CHAIN FRUCTOOLIGOSACCHARIDES (SCFOS)

(30) Priorité: 24.03.2016 FR 1600497
(43) Date de publication de la demande: 27.09.2017
(73) Titulaire: Beghin Meiji SA, 59777 Euralille (FR)
(72) Inventeur: BARON, Laurence, 67600 HILSENHEIM (FR)
(74) Mandataire: Icosa

(56) Documents cités:
- WO-A1-2010/006373
- WO-A2-2012/120154
- US-A1- 2003 213 013
- US-A1- 2004 237 663
- US-B1- 6 248 375
- EDUARDO RODRIGUEZ-SANDOVAL ET AL: "Effect of fructooligosaccharides on the physicochemical properties of sour cassava starch and baking quality of gluten-free cheese bread", STARCH: INTERNATIONAL JOURNAL FOR THE INVESTIGATION, PROCESSING AND USE OF CARBOHYDRATES AND THEIR DERIVATIVES, vol. 66, no. 7-8, 25 février 2014 (2014-02-25), pages 678-684, XP055324359, DE ISSN: 0038-9056, DOI: 10.1002/star.201300233
- JIE ZENG ET AL: "Fructooligosaccharides Impact on the Hydration and Retro-Gradation of Wheat Starch and Gel", INTERNATIONAL JOURNAL OF FOOD PROPERTIES, vol. 19, no. 12, 2016, pages 2682-2692, XP055324360, US ISSN: 1094-2912, DOI: 10.1080/10942912.2015.1136937
- FELISBERTO MÁRIA HERMINIA FERRARI ET AL: "Effect of prebiotic ingredients on the rheological properties and microstructure of reduced-sodium and low-fat meat emulsions", LWT- FOOD SCIENCE AND TECHNOLOGY, vol. 60, no. 1, 2015, pages 148-155, XP029079542, ISSN: 0023-6438, DOI: 10.1016/J.LWT.2014.08.004

## Description

La présente invention est définie conformément aux revendications annexes.

L'invention concerne une méthode pour augmenter la température de gélatinisation d'un amidon compris dans une composition amylacée, une méthode d'obtention d'une composition amylacée de haute stabilité au chauffage et la composition amylacée ainsi obtenue. L'invention concerne en outre, l'utilisation de fructo-oligosaccharides à chaîne courte (ScFOS) comme agent de remplacement des sucres ou des agent de charge sucrant et de retardement de la température de gélatinisation d'un amidon d'une composition aqueuse.

L'amidon est un composé largement retrouvé dans l'alimentation. Les caractéristiques physicochimiques de l'amidon ont un rôle essentiel dans la boulangerie ou la pâtisserie par exemple plus particulièrement lors de la cuisson des gâteaux, la croissance des pâtes sous l'action de la chaleur ou dans les sauces plus particulièrement leur stabilité à la chaleur à la cuisson.

Afin de moduler le niveau de résistance des amidons à la chaleur, autrement dit afin de moduler la température de gélatinisation des amidons, l'art antérieur propose l'utilisation d'amidon modifiés. Dans les applications de pâtisserie, les amidons modifiés ne sont généralement pas utilisés, il convient donc de trouver une autre solution à la problématique.

Par ailleurs, l'art antérieur décrit l'utilisation de certains polyols dans le retardement de la température de gélatinisation notamment dans le cadre du remplacement du sucre. Cependant, l'utilisation des polyols ne se limite qu'aux produits sucrés. En outre, les inventeurs ont démontré que certains polyols ont un effet inverse à savoir réduisent la température de gélatinisation de l'amidon natif.

Il y a donc un besoin d'un produit permettant l'utilisation d'un amidon natif dans des compositions amylacées comprenant des agents de charge sucrant et destinées à la cuisson afin d'améliorer l'uniformité ou les conditions de cuisson ou dans de telles compositions amylacées devant être stable à la chaleur.

L'utilisation de FOS dans des compositions amylacées a été décrite notamment dans le remplacement de l'amidon dans une application très particulière qu'est le gâteau de fromage sans gluten (Rodriguez-Sandoval E., starch/Stärcke, 2014, 66, 678-684). Cependant, une telle utilisation des FOS a été considérée comme non recommandée puisque les auteurs concluent que le replacement d'une partie de l'amidon par les FOS dans la composition induit une forte réduction des qualités organoleptiques des gâteaux obtenus.

L'invention concerne une méthode de réduction des agents de charge sucrant d'une composition amylacée aqueuse présentant des agents de charge sucrant et typiquement, 15 et 60% en masse d'agents de charge sucrant, de 60 à 85% en masse de matières sèches ladite méthode comprenant une étape de substitution de 15 à 100% desdits agents de charge sucrant par des ScFOS préférentiellement de façon à obtenir un ratio en masse amidon/ ScFOS de 0,4 à 4, préférentiellement, entre 0,5 et 3,5 ou entre 0,6 et 3 ; plus préférentiellement, entre 0,7 à 2,5. Préférentiellement, ladite méthode comprenant une étape de substitution de 17 à 75%, de 20 à 60%, de 25 à 55%, de 30 à 50% desdits agents de charge sucrant par des ScFOS.

Par « composition amylacée », on entend une composition comprenant de l'amidon, typiquement comprenant de 0,5 à 50% en masse d'amidon préférentiellement de 1 à 45%, 1,5 à 40%, 5 à 35%, plus préférentiellement, entre 15 à 30% d'amidon. Typiquement, ladite composition amylacée selon l'invention présente 60 à 85% de matière sèche, typiquement de 65 à 80%, préférentiellement de 68 à 78% en masse de matières sèches. Avantageusement, ladite composition amylacée selon l'invention présente de 70 à 85% en masse de matières sèches, préférentiellement de 75 à 85%.

Par « agent de charge sucrant » on entend un ingrédient ou un mélange d'ingrédients apportant de la masse à la composition amylacée ainsi qu'un goût sucré. Typiquement, l'agent de charge sucrant est choisi parmi les sucres alcool, le saccharose, un sirop de glucose.

Selon l'invention, ladite composition amylacée comprend 15 à 60% en masse d'agents de charge sucrant, typiquement, 20 à 58% typiquement, 25 à 50% en masse d'agents de charge sucrant.

Par « sucre-alcool » on entend au sens de la présente invention, tout dérivé hydrogéné de composés saccharidiques renfermant au moins une fonction réductrice. Chaque fonction réductrice de ces sucres est transformée en une fonction alcool par hydrogénation, selon des procédés appropriés et connus de l'homme du métier. Typiquement, le sucre-alcool est choisi parmi le maltitol, l'isomalt, le sorbitol, le xylitol, l'érythritol, le mannitol, les polyglucitols, les polyglycitols, les hydolyates d'amidon hydrogénés et leurs combinaisons.

Par « sirop de glucose », on entend une composition aqueuse comprenant du glucose, typiquement, un mélange de sucre(s) provenant de l'hydrolyse d'un amidon ou d'une fécule.Tel qu'il est utilisé ici, le terme "amidon" désigne tout matériau constitué de polysaccharides de plantes, comprenant de l'amylose et de l'amylopectine avec la formule x(C6H10O5), dans laquelle x peut être un nombre quelconque. Typiquement, on entend un amidon choisi parmi au moins l'une des origines botaniques suivantes le maïs, le blé, le seigle, la patate douce, l'avoine, l'orge, la fécule de pomme de terre, le tapioca, le sagou, l'amarante, le pois typiquement ridé ou le sorgho. L'amidon peut être un amidon waxy. Avantageusement, l'amidon est un amidon natif ou un amidon modifié chimiquement, ou un mélange quelconque de ceux-ci.

Le terme «gélatinisation» désigne la solubilisation d'une molécule d'amidon par la cuisson pour former une suspension visqueuse.

Le terme "température de gélatinisation" se réfère à la plus basse température à laquelle le processus de gélatinisation d'un amidon commence. La température exacte peut varier en fonction de facteurs tels que l'espèce de plante et des conditions environnementales et de croissance de la plante.

Les inventeurs ont démontré de façon surprenante que l'effet dans l'augmentation de la température de gélatinisation de l'amidon était beaucoup plus marqué pour les fructooligosaccharides à chaîne courte (ScFOS) que pour l'inuline ou les fructooligosaccharides (FOS) ou les glucooligosaccharides (GOS) ou les Dextro-oligosaccharides (DOS).

Par « ScFOS » ou « fructooligosaccharides à chaîne courte », on entend des bêta-D-fructanes comprenant de 2 à 10 unités de fructose, dans lequel les unités de fructose sont liées par des liaisons beta-2, 1-glycosidiques et comprenant à l'extrémité terminale une seule unité D-glucose. De préférence, les ScFOS comprennent de 2 à 8, typiquement de 2 à 4 unités de fructose (GF2, GF3 et GF4). De préférence, les ScFOS comprennent 32% (p/p) de GF2, de 47% (p/p) de GF3 et 11% (p/p) GF4. Les ScFOS sont classiquement obtenues par conversion du sucre à partir de betteraves à sucre ou par hydrolyse d'inuline. De telles ScFOS sont par exemple commercialisées par la société BEGHIN MEJI sous la marque ACTILIGHT® ou la société BENEO p95, Orafti, Wijchen.

Le « ratio amidon/ScFOS » correspond au ratio massique d'amidon et de ScFOS compris dans la composition.

Le « taux d'humidité » peut être évalué par des méthodes de titration chimique (par exemple le titrage Karl Fischer), par des méthodes de détermination de la perte de masse à la dessiccation (à l'aide d'une étuve sous vide ou non et à température contrôlée). Typiquement, la composition amylacée comprend une activité de l'eau (Aw) ayant une valeur supérieure à 0,7, typiquement entre 0,8 et 0,99, notamment comprise entre 0,85 et 0,98, typiquement entre 0,9 et 0,96.

L'activité de l'eau d'un produit est une notion qui est bien connue dans le domaine alimentaire, cette grandeur, en abrégé Aw, mesure la disponibilité de l'eau dans un échantillon. L'Aw est généralement mesurée à 25°C par différents instruments tels que par exemple AquaLab modèle CX-2, Decagon Devices, Inc., Pullman, WA. De tels instruments comprennent une chambre de mesure fermée. L'Aw est définie comme le rapport entre la pression de vapeur d'eau dans la chambre sur un échantillon (P), par exemple une composition amylacée, divisée par la pression de l'eau au-dessus de l'eau pure (P0). Ainsi, la multiplication de l'activité de l'eau de l'échantillon par 100 donne l'humidité relative de l'atmosphère en équilibre avec l'échantillon.

L'invention concerne également, une méthode d'obtention d'une composition amylacée de haute stabilité au chauffage à des températures de 80 à 100 °C, préférentiellement de 85 °C à 95°C, ladite composition amylacée présentant des agents de charge sucrant et typiquement, 15 et 60% en masse d'agents de charge sucrant, et de 60 à 85% en masse de matières sèches, ladite méthode comprenant une étape de substitution de 15 à 100% desdits agents de charge sucrant par des ScFOS, de sorte à obtenir un ratio en masse amidon/ ScFOS de 0,4 à 4, préférentiellement, entre 0,5 et 3,5 ou entre 0,6 et 3; plus préférentiellement, entre 0,7 à 2,5.

Par « haute stabilité au chauffage » on entend une stabilité améliorée notamment une résistance de la composition, une conservation des caractéristiques physicochimiques (notamment de viscosité ou de non rétrogradation) à des températures supérieures à la température de gélatinisation de l'amidon qui est compris dans ladite composition.

L'invention concerne en outre, une méthode d'amélioration de la texture de la mie d'un gâteau ou d'une génoise comprenant une étape d'addition de ScFOS dans un ratio en masse amidon/ ScFOS de 0,4 à 4, préférentiellement, entre 0,5 et 3,5 ou entre 0,6 et 3 ; plus préférentiellement, entre 0,7 à 2,5.L'invention concerne enfin l'utilisation de fructo-oligosaccharides à chaîne courte (ScFOS) comme agent de remplacement d'agent de charge sucrant et/ou de retardement de la température de gélatinisation d'un amidon compris dans une composition aqueuse.

L'invention concerne également, l'utilisation de ScFOS comme agent pour augmenter la température de gélatinisation d'un amidon compris dans une composition aqueuse et plus particulièrement une composition amylacée aqueuse. Typiquement une augmentation de 1 à 20% préférentiellement, de 2 à 10% typiquement de 3 à 7% de la température de gélatinisation dudit amidon.

L'invention concerne enfin une composition amylacée comprenant des agents de charge sucrant, de 0,5 à 50% en masse d'amidon, présentant de 60 à 85% en masse de matières sèches et une activité de l'eau (Aw) supérieure à 0,8, ladite composition comprenant des fructo-oligosaccharides à chaîne courte (ScFOS) et un ratio massique amidon/ ScFOS de 0,4 à 4. Typiquement, ladite composition amylacée comprend 13 à 50% en masse d'agents de charge sucrant.

Typiquement, la composition aqueuse amylacée est une soupe, une sauce préférentiellement choisie parmi la béchamel ou la mayonnaise, une préparation pâtissière notamment pour gâteau, génoise ou biscuit.

On entend par « préparation pâtissière » une pâte, un appareil ou une composition amylacée destinée à être cuite afin d'obtenir un gâteau, un biscuit ou une génoise.

Cet effet est particulièrement avantageux dans la résistance des compositions amylacées à la cuisson telles que par exemple les pâtes destinées à être cuites pour obtenir des gâteaux ou des biscuits mais également des soupes ou des sauces.

L'invention concerne également des compositions aqueuses amylacées comprenant plus particulièrement de 0,5 à 50% en masse d'amidon préférentiellement de 1 à 45%, 1,5 à 40%, 5 à 35%, plus préférentiellement, entre 15 à 30% d'amidon et des ScFOS de façon à obtenir un ratio en masse amidon/ ScFOS de 0,4 à 4, préférentiellement, entre 0,5 et 3,5 ou entre 0,6 et 3; plus préférentiellement, entre 0,7 à 2,5, ladite composition pouvant être une sauce, une soupe ou une pâte à gâteau ou à biscuit.

### FIGURES

**Figure 1** **:** Mesure de la température de gélatinisation en fonction de la concentration en DOS, GOS, polydextrose et en Inuline.
**Figure 2** **:** Mesure de la température de gélatinisation en fonction de la concentration en inuline et en FOS.
**Figure 3** **:** Mesure de la température de gélatinisation en fonction de la concentration en glucose.
**Figure 4** **:** Mesure de la température de gélatinisation en fonction de la concentration en fructose.
**Figure 5** **:** Mesure de la température de gélatinisation en fonction de la concentration en DOS, GOS, ScFOS, FOS et en Inuline.
**Figure 6** **:** Mesure de la température de gélatinisation en fonction de la concentration en maltose ou en scFOS.

### Exemples

### Matériels et méthodes

### 1. Protocole d'obtention des gâteaux

### 1.1. Produits

Farine de blé Type 45 fournie par les Grands Moulins de Strasbourg

Les fibres testées sont les suivantes :
- Fructo-oligosaccharides à courtes chaînes (ACTILIGHT® 950S) commercialisé par BEGHIN MEIJI,
- Fructo-oligosaccharides (ORAFTI® L95) commercialisé par BENEO,
- Dextro-oligosaccharides (NUTRIOSE®) commercialisé par ROQUETTE FRERES,
- Polydextrose (LITESSE® ULTRA™) commercialisé par DANISCO,
- Galacto-ologosaccharides (Vivinal GOS), commercialisé par Friesland Campina
- Inuline (ORAFTI® GR) commercialisé par BENEO.

Le sucre semoule surfine 250 Béghin Say est commercialisé par TEREOS Eau

### 1.2. Protocole

Les essais ont été réalisés en mélangeant de la farine de blé Type 45, du sucre et/ou des fibres avec de l'eau. Les autres constituants de la recette, à savoir les œufs, la matière grasse, les poudres levantes, les arômes, les émulsifiants ont été retirés de la formulation. Leurs proportions étant constante d'un essai à l'autre, leur impact est considéré comme identique et s'annule d'un essai à l'autre. D'autre part, ils ont une contribution plus limité sur la température de gélatinisation de l'amidon que le sucre et autres produits sucrant. Une pâte à 72% de matière sèche est obtenue, ce qui correspond plus ou moins à l'extrait sec d'une formulation classique de quatre quart (ou cake ou pâte jaune).

Les ingrédients sont pesés et mélangés manuellement avant toute mesure de viscosité. Les différentes fibres sont testées en substitution du sucre du fait de leur pouvoir sucrant. Différents niveaux de substitution sont testés, entre 30% et 100% de substitution du sucre. La base de calcul est réalisée sur la matière sèche de chaque composant. L'eau ajoutée est ajustée afin d'obtenir une teneur en extrait sec de 72%.

Les conditions de cuisson sont les mêmes pour l'ensemble de l'étude. Les gradients de température sont réglés selon les paramètres suivants : de 25 °C à 90°C à 3 °C/min, la température est maintenue à 90 °C pendant 1min, puis de 90 à 50°C à 3 °C/min.

### 2. Mesure de viscosité, mesure du point de gélatinisation

Les mélanges préparés sont analysés à l'aide d'un viscosimètre (Viscograph Type E de Brabender) selon le protocole suivant. Le ratio sucre/fibres est ajusté en fonction du niveau de substitution recherché, l'eau est ajoutée de manière à obtenir un extrait sec de 72% dans tous les essais. Le ratio farine/produits sucrants est constant dans tous les essais. Le mélange est réalisé dans le godet du Viscographe et mélangé vigoureusement à l'aide d'une spatule avant le démarrage de l'analyse. Après une stabilisation à 25 °C pendant 6 minutes, l'échantillon subit une rampe de température de 25 °C à 90°C à une vitesse de 3 °C/min. Après un maintien à 90 °C pendant 1minute, il subit une baisse de température jusqu'à 50 °C à la même vitesse, soit 3 °C/min. Certains essais ont été interrompus avant d'atteindre les 90 °C, la viscosité de la pâte devenant trop importante. Les analyses sont faites en dupliqué.

L'utilisation du Viscograph E permet de réaliser des mesures de viscosité en fonction des paramètres de cuisson choisis. La détermination du point de départ de la gélatinisation est rendu possible par un paramétrage lent de montée en température. On parle de point de gélatinisation (Starting Gelling Point ou SGP) dont l'unité est le degré Celsius (°C). Le point de gélatinisation est déterminé par l'augmentation brutale en viscosité du mélange. Lorsque l'amidon (contenu dans la farine) est mis en présence d'un excès d'eau à une température supérieure à 60 °C, il subit un gonflement irréversible ce qui provoque une augmentation de la viscosité du milieu. La température de gélatinisation est dépendante de la nature botanique de l'amidon et de la teneur en eau du milieu. L'ajout de produits sucrants ou de fibres induit une compétition pour l'eau entre les différents éléments du milieu, la farine et les produits sucrants ou les fibres. Le retardement de la température de gélatinisation de l'amidon aura pour conséquence un volume plus important du cake, puisque la structure donnée par l'amidon est figée plus tardivement. En effet, pendant l'étape de cuisson au four, une quantité importante d'eau doit s'échapper de la pâte sous forme de vapeur. Si la structure du cake est figée trop tôt, l'eau ne pourra s'en échapper et ce qui entraîne la formation d'une mie compacte et humide. L'analyse de l'évolution de la température de gélatinisation en fonction du type de fibres et de la concentration en fibres a permis de mettre en évidence une corrélation linéaire entre la température de gélatinisation et la concentration en fibres. Cette corrélation est vérifiée pour un intervalle de confiance de 95%, sauf pour les GOS, pour lesquelles la linéarité n'est pas démontrée.

Afin de vérifier l'impact de la température de gélatinisation sur les qualités organoleptiques des cakes, des corrélations ont été faites avec des produits finis, notamment le volume spécifique du cake après cuisson.

### Exemple 1 Effet de l'inuline sur le retardement du point de gélatinisation de l'amidon

Le modèle d'étude utilisé est le cake. Les fibres testées sont les suivantes :
- DOS (Dextro-oligosaccharides) (NUTRIOSE® commercialisé par ROQUETTE FRERES),
- Polydextrose (LITESSE ULTRA® commercialisé par DANISCO),
- GOS (Galacto-oligosaccharides) (Vivinal GOS), commercialisé par Friesland Campina,
- Inuline (ORAFTI GR® commercialisé par Beneo).

Les formulations testées sont présentées ci-dessous.

**Tableau 1 : Composition des formulations testées avec substitution du sucre par des DOS, des GOS, de l'inuline et du Polydextrose, à des niveaux allant de 20% à 100%.**

| Niveau de remplacement du sucre (en matière sèche) | 20% | 30% | 50% | 100% |
|---|---|---|---|---|
| Farine | 14,7 | 14,7 | 14,7 | 14,7 |
| Sucre | 13,4 | 11,8 | 8,4 | - |
| Eau | Qsp | Qsp | Qsp | Qsp |
| DOS | - | 5,0 | 8,4 | 16,8 |
| GOS | - | 5,0 | 8,4 | 16,8 |
| Inuline | 3,4 | - | - | - |
| Polydextrose | - | 5,0 | 8,4 | 16,8 |

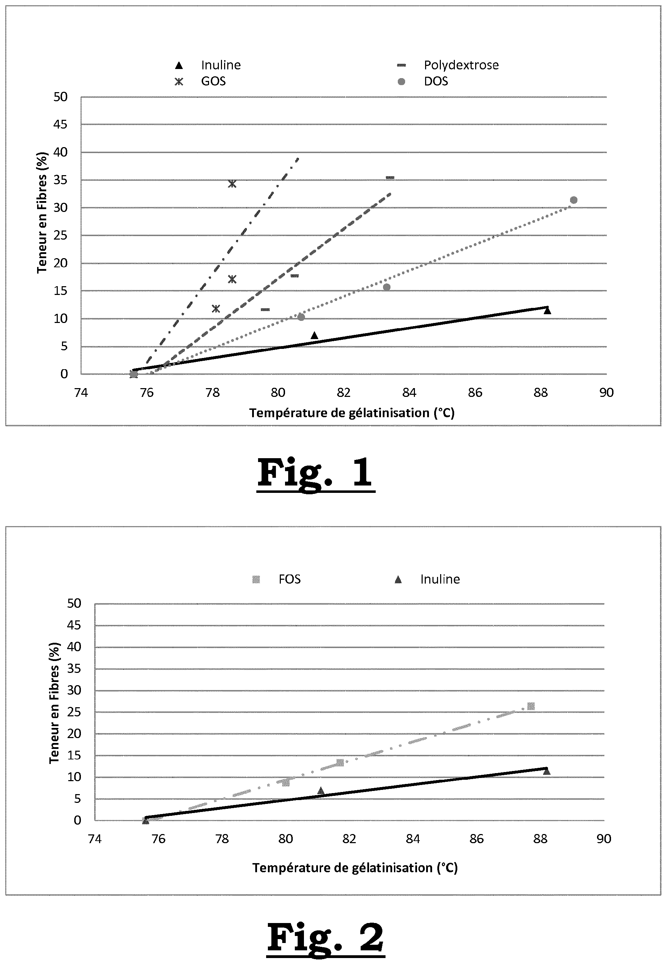

L'Aw des compositions à 20, 30, 50 et 100% de remplacement du sucre été évaluée à 25 °C par l'appareil AquaLab modèle CX-2, Decagon Devices, Inc., Pullman, WA. L'Aw mesurée des compositions sont les suivantes 0,94 (+/-0,01) pour 20% de remplacement du sucre ; 0,94(+/-0,02) pour 30% de remplacement du sucre, 0,94 (+/-0,02) pour 50% de remplacement du sucre et 0,92 (+/-0,02) pour 100% de remplacement du sucre. L'évolution de la température de gélatinisation en fonction du type de fibres (à savoir l'inuline, les DOS, les GOS ou le polydextrose) et de la concentration en fibres est reprise dans la figure 1. Ainsi, à la lecture des résultats, on observe que lorsque la concentration en fibres augmente, la température de gélatinisation est augmentée. Cela signifie que globalement les fibres retardent la température de gélatinisation de l'amidon, mais pour une même concentration, l'augmentation de la température n'est pas la même pour toutes les fibres. De plus, comparativement aux DOS, GOS et au polydextrose, l'inuline a la plus grande capacité à retarder la température de gélatinisation. De plus, les GOS et le polydextrose n'ont qu'un très faible pouvoir pour retarder la température de gélatinisation de l'amidon. Ainsi, même à haute concentration, ce pouvoir reste trop faible pour que leur utilisation dans le retardement de la température de gélatinisation soit envisageable.

Cependant, au cours des essais, il a été mis en évidence que l'ajout d'inuline dans la préparation induit une forte augmentation de la viscosité limitant ainsi la quantité de fibres pouvant être ajoutée dans le mélange.

En effet, il n'a été possible de substituer que 20% du sucre par l'inuline. A une concentration supérieure, la viscosité de la pâte est trop élevée et il n'est plus possible de faire de mesure au viscosimètre.

Néanmoins, même à 8% de fibres en poids dans le mélange à 72% de matière sèche, l'inuline permet de retarder la température de gélatinisation de 5,5°C. Ceci a pour conséquence de permettre un meilleur développement du volume du cake, d'améliorer la structure de la mie et d'améliorer le moelleux du cake.

En outre, l'ajout d'inuline au-delà de 8% de fibres induit une modification des caractéristiques physicochimiques du mélange conduisant à une modification des caractéristiques gustatives du cake après cuisson. En effet, il a été constaté une perte des caractéristiques organoleptiques du cake obtenu, à savoir des produits finis d'aspect très brun et de faible volume donc moins agréable en bouche.

Par ailleurs, le pouvoir sucrant de l'inuline étant très faible, le remplacement du sucre par l'inuline fait fortement chuter la perception sucrée dans le produit fini.

### Exemple 2 Réduction ou inversion de l'effet sur la température de gélatinisation lors de la réduction du degré de polymérisation des oligosaccharides

Afin de réduire l'effet observé sur les caractéristiques organoleptiques du cake ou sur la viscosité de la composition tout en réduisant la perte du goût sucré constatée précédemment, l'inuline a été remplacée par des molécules avec un degré de polymérisation plus faible telles que des FOS (ORFATl® L95) ou par des monosaccharides (dextrose (MERITOSE® 200) ou Fructose pulvérulent. Les proportions utilisées sont celles reprises dans le tableau 2 ci-dessous.

**Tableau 2 : Composition des formulations testées avec substitution du sucre par des FOS, du dextrose, et du fructose, à des niveaux allant de 30% à 100%.**

| Niveau de remplacement du sucre (en matière sèche) | 30% | 50% | 100% |
|---|---|---|---|
| Farine | 14,7 | 14,7 | 14,7 |
| Sucre | 11,8 | 8,4 | - |
| Eau | Qsp | Qsp | Qsp |
| FOS | 5,0 | 8,4 | 16,8 |
| dextrose | 5,0 | 8,4 | 16,8 |
| fructose | 5,0 | 8,4 | 16,8 |

L'Aw des compositions a été mesurée comme précédemment. Les résultats obtenus sont les suivants : 0,94 (+/-0,02) pour 30% de remplacement du sucre ; 0,93 (+/-0,02) pour 50% de remplacement du sucre et 0,91 (+/-0,02) pour 100% de remplacement du sucre. La figure 2 reprend les résultats observés pour l'inuline ainsi que pour les FOS qui ont un degré de polymérisation bien inférieur à celui de l'inuline. Le degré de polymérisation de l'inuline étant de 2 à 60 unités, le degré de polymérisation des FOS est de 2 à 8 unités, la structure moléculaire de ces fibres est très différente de celle du dextrose ou du fructose qui n'est que d'une seule unité. L'impact sur la viscosité du mélange lors de l'adjonction de FOS est minime et n'induit pas de conséquence sur les caractéristiques organoleptiques du gâteau obtenu. Cependant, l'analyse de la figure 2 montre que les FOS ont un effet moins important dans le retardement de la gélatinisation de l'amidon que celui observé pour l'inuline.

Ainsi, alors que l'on réduit l'effet délétère de l'inuline sur la viscosité du mélange par la réduction du degré de polymérisation de la fibre utilisée, on réduit drastiquement et simultanément l'effet observé dans le retardement de la température de gélatinisation de l'amidon.

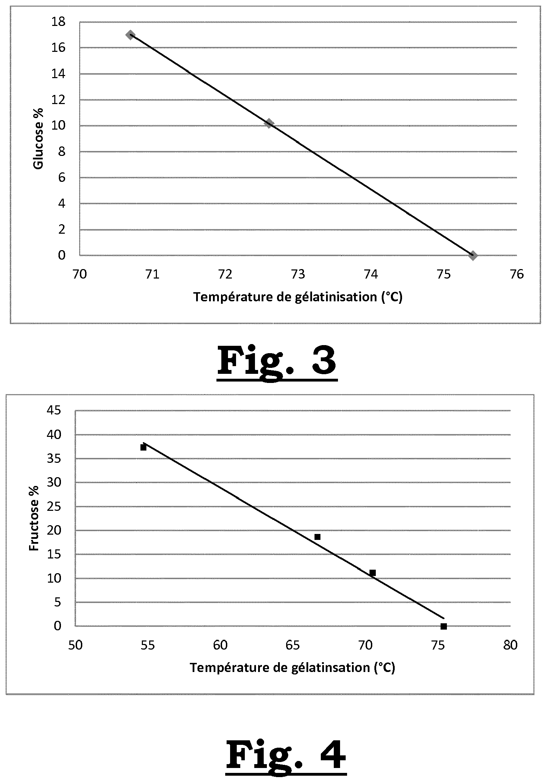

Par ailleurs, les résultats observés quant à l'effet du dextrose ou du fructose sur la température de gélatinisation de l'amidon vont plus loin puisque l'on observe un phénomène inverse qui est la réduction de la température de gélatinisation (figure 3). En effet, lorsque la proportion de ces monosaccharides augmente dans la formulation, la température de gélatinisation est plus précoce.

### Exemple 3 Effet des ScFOS dans le retardement de la température de gélatinisation tout en maintenant les caractéristiques physicochimiques et organoleptiques du mélange obtenu

L'effet des ScFOS dans le retardement de la température de gélatinisation de l'amidon a été comparé avec celui de l'inuline, des GOS, DOS ou des FOS dans les proportions présentées dans le tableau 3 ci-dessous.

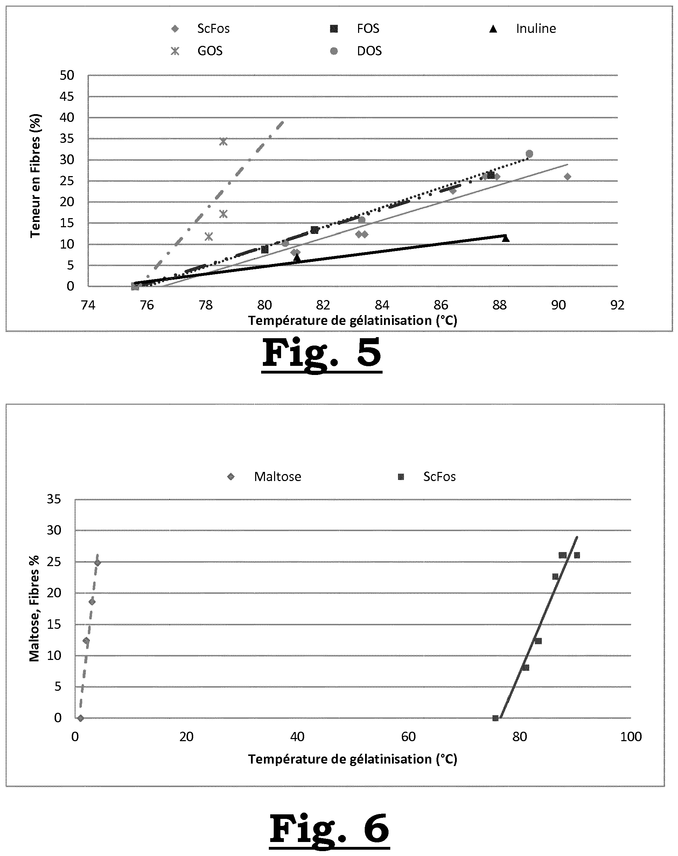

L'Aw des compositions a été mesurée comme précédemment. Les résultats obtenus sont les suivants 0,94(+/-0,02) pour 30% de remplacement du sucre, 0,93 (+/-0,02) pour 50% de remplacement du sucre et 0,92(+/-0,02) pour 100% de remplacement du sucre. Les résultats (voir figure 5) montrent clairement que l'effet des ScFOS dans le retardement de la température de gélatinisation de l'amidon est certes légèrement inférieur à celui observé pour l'inuline mais il est bien supérieur à celui observé pour les GOS, DOS ou les FOS.

**Tableau 3 : Composition des formulations testées avec substitution du sucre par des FOS, des ScFos, des DOS, des GOS et de l'inuline, à des niveaux allant de 30% à 100%.**

| Niveau de remplacement du sucre (en matière sèche) | 30% | 50% | 100% |
|---|---|---|---|
| Farine | 14,7 | 14,7 | 14,7 |
| Sucre | 11,8 | 5,4 | - |
| Eau | Qsp | Qsp | Qsp |
| FOS | 5,0 | 5,4 | 16,8 |
| ScFOS | 5,0 | 5,4 | 16,8 |
| DOS | 5,0 | 5,4 | 16,8 |
| GOS | 5,0 | 5,4 | 16,8 |
| Inuline | 5,0 | 5,4 | 16,8 |

Il a donc été très surprenant de constater que les ScFOS qui sont composés de courtes chaînes de tri- à tetramères (GF2 (∼37%), GF3 (∼53%), GF4 (∼10%)), ont un tel pouvoir de retardement de la température de gélatinisation de l'amidon. Ces très courtes chaînes de glucose et fructose sont à la fois plus efficaces à retarder la température de gélatinisation que les polysaccharides à chaîne plus longues tels que les DOS, les FOS ou les GOS mais également ont un effet inverse à celui observé pour les monosaccharides (dextrose et fructose) qui les composent.

Afin de comparer l'effet d'autres oligosaccharides de taille réduite aux ScFOS dans le retardement de la température de gélatinisation, le maltose (DP2) (GLUCOMALT® 760) a été utilisé (figure 6).

Les résultats obtenus montrent que le maltose a un effet bénéfique sur le retardement de la température de gélatinisation. Néanmoins, cet effet est moins marquant que celui des ScFOS qui est plus efficace.

En outre, les résultats montrent lors de l'observation visuelle des gâteaux obtenus à partir des ScFOS un gonflement aussi bon voir meilleur (à 50 et 30% de remplacement du sucre) que ceux avec 100% de sucre. De plus, les ScFOS confèrent au gâteaux une perception plus moelleuse et une mie plus régulière.

## Revendications

1. Méthode de réduction des agents de charge sucrant d'une composition amylacée aqueuse présentant des agents de charge sucrant et de 60 à 85% en masse de matières sèches, ladite méthode comprenant une étape de substitution de 15 à 100% desdits agents de charge sucrant par des fructo-oligosaccharides à chaîne courte (ScFOS) dans un ratio en masse amidon/ ScFOS de 0,4 à 4 ; lesdits fructo-oligosaccharides à chaîne courte présentant 2 à 8 unités de fructose.

2. Méthode selon la revendication 1 **caractérisée en ce que** les ScFOS comprennent de 2 à 4 unités de fructose.

3. Méthode selon l'une ou l'autre des revendications 1 et 2 **caractérisée en ce que** ladite composition amylacée présente une activité de l'eau (Aw) supérieure à 0,8.

4. Méthode d'obtention d'une composition amylacée aqueuse stable au chauffage à des températures de 80°C à 100°C, ladite composition amylacée présentant des agents de charge sucrant et de 60 à 85% en masse de matières sèches, ladite méthode comprenant une étape de substitution de 15 à 100% desdits agents de charge sucrant par des fructo-oligosaccharides à chaîne courte (ScFOS), de sorte à obtenir un ratio massique amidon / ScFOS compris entre de 0,4 à 4 ; lesdits fructo-oligosaccharides à chaîne courte présentant 2 à 8 unités de fructose.

5. Méthode selon la revendication 4 **caractérisé en ce que** ladite composition est une mayonnaise, une sauce de type sauce béchamel ou une soupe.

6. Composition amylacée comprenant de 0,5 à 50% en masse d'amidon, présentant des agents de charge sucrant et de 60 à 85% en masse de matières sèches et une activité de l'eau (Aw) supérieure à 0,8, ladite composition comprenant des fructo-oligosaccharides à chaîne courte (ScFOS) et un ratio massique amidon/ ScFOS de 0,4 à 4 ; lesdits fructo-oligosaccharides à chaîne courte présentant 2 à 8 unités de fructose.

7. Composition selon la revendication 6 **caractérisée en ce qu'**elle est une soupe une sauce préférentiellement choisie parmi la béchamel ou la mayonnaise, une préparation pâtissière notamment pour gâteau, génoise ou biscuit.

8. Méthode d'amélioration de la texture de la mie d'un gâteau, d'un biscuit ou d'une génoise comprenant une étape d'addition de fructo-oligosaccharides à chaîne courte (ScFOS) dans un ratio massique amidon /ScFOS compris entre 0,4 à 4 ; lesdits fructo-oligosaccharides à chaîne courte présentant 2 à 8 unités de fructose.

9. Utilisation de fructo-oligosaccharides à chaîne courte (ScFOS) comme agent de remplacement d'agent de charge sucrant et de retardement de la température de gélatinisation d'un amidon compris dans une composition aqueuse ; lesdits fructo-oligosaccharides à chaîne courte présentant 2 à 8 unités de fructose.

## Patentansprüche

1. Verfahren zum Reduzieren der versüßenden Füllstoffe einer wässrigen stärkehaltigen Zusammensetzung, welche versüßende Füllstoffe und von 60 bis 85 Ma-% an Trockensubstanzen aufweist, wobei das Verfahren einen Schritt des Substituierens von 15 bis 100% der versüßenden Füllstoffe durch kurzkettige Fructo-Oligosaccharide (ScFOS) in einem Masseverhältnis Stärke/ScFOS von 0,4 bis 4 umfasst; wobei die kurzkettigen Fructo-Oligosaccharide 2 bis 8 Fructose-Einheiten aufweisen.

2. Verfahren nach Anspruch 1, **dadurch gekennzeichnet, dass** die ScFOS von 2 bis 4 Fructose-Einheiten umfassen.

3. Verfahren nach dem einen oder anderen der Ansprüche 1 und 2, **dadurch gekennzeichnet, dass** die stärkehaltige Zusammensetzung eine Wasseraktivität (Aw) von mehr als 0,8 aufweist.

4. Verfahren zum Erhalten einer beim Erhitzen auf Temperaturen von 80 °C bis 100 °C stabilen wässrigen stärkehaltigen Zusammensetzung, wobei die stärkehaltige Zusammensetzung versüßende Füllstoffe und von 60 bis 85 Ma-% an Trockensubstanzen aufweist, wobei das Verfahren einen Schritt des Substituierens von 15 bis 100 % der versüßenden Füllstoffe durch kurzkettige Fructo-Oligosaccharide (ScFOS) umfasst, um ein Masseverhältnis Stärke/ScFOS zu erhalten, das zwischen 0,4 bis 4 enthalten ist; wobei die kurzkettigen Fructo-Oligosaccharide 2 bis 8 Fructose-Einheiten aufweisen.

5. Verfahren nach Anspruch **4, dadurch gekennzeichnet, dass** die Zusammensetzung eine Mayonnaise, eine Sauce des Typs Béchamelsauce oder eine Suppe ist.

6. Stärkehaltige Zusammensetzung, umfassend von 0,5 bis 50 Ma-% an Stärke, versüßende Füllstoffe und von 60 bis 85 Ma-% an Trockensubstanzen und eine Wasseraktivität (Aw) von mehr als 0,8 aufweisend, wobei die Zusammensetzung kurzkettige Fructo-Oligosaccharide (ScFOS) und ein Masseverhältnis Stärke/ScFOS von 0,4 bis 4 umfasst; wobei die kurzkettigen Fructo-Oligosaccharide 2 bis 8 Fructose-Einheiten aufweisen.

7. Zusammensetzung nach Anspruch **6, dadurch gekennzeichnet, dass** sie eine Suppe, eine Sauce, vorzugweise ausgewählt aus Béchamel oder Mayonnaise, eine Konditorzubereitung, insbesondere für Kuchen, Biskuit oder Gebäck ist.

8. Verfahren zur Verbesserung der Textur der Krume eines Kuchens, eines Gebäcks oder eines Biskuitteigs, umfassend einen Schritt des Beigebens von kurzkettigen Fructo-Oligosacchariden (ScFOS) in einem Masseverhältnis Stärke/ScFOS, die zwischen 0,4 und 4 enthalten ist; wobei die kurzkettigen Fructo-Oligosaccharide 2 bis 8 Fructose-Einheiten aufweisen.

9. Verwendung von kurzkettigen Fructo-Oligosacchariden (ScFOS) als Ersatzmittel für einen versüßenden Füllstoff und zur Verzögerung der Geliertemperatur einer in einer wässrigen Zusammensetzung enthaltenen Stärke; wobei die kurzkettigen Fructo-Oligosaccharide 2 bis 8 Fructose-Einheiten aufweisen.

## Claims

1. Method for reducing the sweetening bulking agents of an aqueous starchy composition having sweetening bulking agents and from 60 to 85% by mass of dry matter, said method comprising a step of substituting from 15 to 100% of said bulking sweetening agents with short-chain fructo-oligosaccharides (ScFOS) in a starch / ScFOS mass ratio from 0.4 to 4; said short-chain fructo-oligosaccharides having 2 to 8 units of fructose.

2. Method according to claim **1 characterized in that** the ScFOS comprise from 2 to 4 units of fructose.

3. Method according to either of claims **1** and **2 characterized in that** said starchy composition has a water activity (Aw) greater than 0.8.

4. Method for obtaining an aqueous starchy composition stable on heating at temperatures from 80°C to 100°C, said starchy composition having sweetening bulking agents and from 60 to 85% by mass of dry matter, said method comprising a step of substituting from 15 to 100% of said sweetening bulking agents with short-chain fructo-oligosaccharides (ScFOS), so as to obtain a starch / ScFOS mass ratio comprised between from 0.4 and 4; said short-chain fructo-oligosaccharides having 2 to 8 units of fructose.

5. Method according to claim **4 characterized in that** said composition is a mayonnaise, a Béchamel-type sauce or a soup.

6. Starchy composition comprising from 0.5 to 50% by mass of starch, having sweetening bulking agents and from 60 to 85% by mass of dry matter and a water activity (Aw) greater than 0.8, said composition comprising short-chain fructo-oligosaccharides (ScFOS) and a starch / ScFOS mass ratio from 0.4 to 4; said short-chain fructo-oligosaccharides having 2 to 8 fructose units.

7. Composition according to claim **6 characterized in that** it is a soup, a sauce preferably chosen from Béchamel or mayonnaise, a pastry preparation in particular for cake, sponge cake or cookie.

8. Method for improving the texture of the crumb of a cake, a cookie or a sponge cake comprising a step of adding short-chain fructo-oligosaccharides (ScFOS) in a mass ratio of starch / ScFOS comprised between from 0.4 to 4; said short-chain fructo-oligosaccharides having 2 to 8 fructose units.

9. Use of short-chain fructo-oligosaccharides (ScFOS) as a substitute for a sweetening bulking agent and for delaying the gelatinization temperature of a starch comprised in an aqueous composition; said short-chain fructo-oligosaccharides having 2 to 8 fructose units.
